(19) Europäisches Patentamt
European Patent Office
Office européen des brevets

(11) **EP 4 492 165 A1**

(12) **EUROPEAN PATENT APPLICATION**

(43) Date of publication:
**15.01.2025 Bulletin 2025/03**

(51) International Patent Classification (IPC):
**G05B 13/04** $^{(2006.01)}$    **G05B 17/02** $^{(2006.01)}$
**G09B 9/02** $^{(2006.01)}$    **G09B 19/16** $^{(2006.01)}$
**G06F 30/00** $^{(2020.01)}$

(21) Application number: **23184725.2**

(22) Date of filing: **11.07.2023**

(52) Cooperative Patent Classification (CPC):
**G05B 17/02; G05B 13/042; G06F 30/15;
G06F 30/20; G09B 9/04; G09B 9/12;** G06F 2111/04;
G06F 2119/14

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **TOYOTA JIDOSHA KABUSHIKI
KAISHA**
**Toyota-shi, Aichi-ken, 471 8571 (JP)**

(72) Inventors:
• **LAZCANO, Andrea**
  **1140 BRUSSELS (BE)**

• **AKUTAIN, Xabier Carrera**
  **1140 BRUSSELS (BE)**
• **JAIN, Vishrut**
  **2628 CD Delft (NL)**
• **SHYROKAU, Barys**
  **2628 CD Delft (NL)**
• **HAPPEE, Riender**
  **2628 CD Delft (NL)**

(74) Representative: **Cabinet Beau de Loménie
158, rue de l'Université
75340 Paris Cedex 07 (FR)**

Remarks:
Amended claims in accordance with Rule 137(2)
EPC.

(54) **METHOD AND CALCULATOR DEVICE FOR CALCULATING AT LEAST ONE CONTROL VALUE, AND SIMULATOR**

(57)    A computer-implemented method for calculating at least one control value ($y_k$) to be inputted to an actuator controller (18) for tracking a target motion ($u_k$), the method comprising extracting a high-frequency component (HFC) and a low-frequency component (LFC) from the target motion ($u_k$), and inputting the high-frequency component (HFC) and the low-frequency component (LFC) into an optimization model (30) configured to take into account one or more physical constraints to output the at least one control value ($y_k$).

**FIG. 2**

EP 4 492 165 A1

# EP 4 492 165 A1

**Description**

BACKGROUND OF THE INVENTION

1. Field of the invention

The present disclosure relates to the field of actuator control, and more particularly to a method for calculating at least one control value to be inputted to an actuator controller for tracking a target motion. The present disclosure further relates to a calculator device and a simulator. The method, calculator device and simulator may find applications in all kinds of industries, including the automotive industry.

2. Description of Related Art

In many applications, including but not limited to driving simulators, it is desired to recreate a motion experience. To this end, actuators may be employed and controlled to track a target motion.
A possible approach for controlling actuators relies on so-called Model Predictive Control (hereinafter shortened as MPC; see [REFS. 1 to 3]). However, MPC suffers from high computation time hindering the real-time application of such a technique. To reduce computational costs, explicit MPC can be applied, which pre-computes the solution and uses it in the form of a look-up table online. Although this technique reduces online computation time, it suffers from memory storage issues along with restrictions in using large prediction horizons with fast sampling rates. This is due to the exponential increase in control region computation time with an increase in the complexity and scope of the problem, thus requiring a more feasible alternative.
The following references disclose various methods relating to the field of MPC.

[REF. 1 Bruschetta, M., Maran, F., and Beghi, A., 2016. A nonlinear, MPC-based motion cueing algorithm for a high-performance, nine-DoF dynamic simulator platform. IEEE Transactions on Control Systems Technology, 25(2), pp. 686-694.
[REF. 2] Khusro, Y. R., Zheng, Y., Grottoli, M., and Shyrokau, B., 2020. MPC-based motion-cueing algorithm for a 6-DOF driving simulator with actuator constraints. Vehicles, 2(4), pp. 625-647.
[REF. 3] Lamprecht, A., Steffen, D., Nagel, K., Haecker, J., and Graichen, K., 2021. Online model predictive motion cueing with real-time driver prediction. IEEE Transactions on Intelligent Transportation Systems, 23(8), pp. 12414-12428.
[REF. 4] Fang, Z., & Kemeny, A., 2012. Motion cueing algorithms for a real-time automobile driving simulator. In Driving Simulation Conference, pp. 159-174.

SUMMARY

The object of the present invention is to at least substantially remedy the above-mentioned drawbacks.
In this respect, the present disclosure relates to a computer-implemented method for calculating at least one control value to be inputted to an actuator controller for tracking a target motion, the method comprising extracting a high-frequency component and a low-frequency component from the target motion, and inputting the high-frequency component and the low-frequency component into an optimization model configured to take into account one or more physical constraints to output the at least one control value.
For conciseness, the method may be referred to hereinafter as the calculation method.
As used herein, for conciseness and unless the context indicates otherwise, "a", "an", and "the" are intended to refer to "at least one" or "each" and to include plural forms as well. Conversely, generic uses of the plural form may include singular elements.
The actuator controller may be configured to control at least one actuator.
The target motion may be represented by one or more signals or values. The target motion may be pre-processed before extracting the high-frequency component and the low-frequency component therefrom.
The high-frequency (HF) component may include a portion of the target motion corresponding to frequencies greater than a first threshold, whereas the low-frequency (LF) component may include a portion of the target motion corresponding to frequencies less than a second threshold. The first threshold may be less than, equal to or greater than the second threshold; that is, there may be an overlap, a boundary or a gap between the HF component and the LF component. However, in any case, the HF component includes high frequency information of the target motion that is not included in the LF component, and likewise, the LF components includes low frequency information of the target motion that is not included in the HF component.
The HF and LF components are defined in a relative manner. The HF component represents the tendency of the target motion to fluctuate about a value that is constant or that varies slowly, e.g. about its mean value. In particular, the HF component may be a function solely of the rapid fluctuations of the target motion, excluding information representing slow variations of the target motion, i.e. excluding information representing how the mean value of the target motion varies and possibly how lower frequency harmonics vary. Conversely, the LF component represents slow variations of the target motion, i.e. information representative of only the variation in the mean value of the signal, or possibly of variation in its lower frequency harmonics.

The HF and LF components may be extracted by high-pass and low-pass filters, respectively, or any other suitable technique.

The optimization model is a model configured to take, as inputs, the high-frequency component, the low-frequency component and one or more physical constraints, and to output at least one control value for the actuator controller. The optimization model may rely on at least one suitable algorithm. The HF component and the LF components are inputted to the optimization model as separate inputs and/or through separate channels. The control value may be a value for controlling the actuator controller, e.g. a value commanded to the actuator controller. The actuator controller may control the at least one actuator such that actuation thereof results in replicating the control value.

Thanks to extracting the HF component and the LF component before running the optimization model, the optimization model benefits from predefined guidance, which makes convergence faster. In addition, the optimization model is able to take constraints into account, which results in better motion replication in tracking the target motion. All in all, the proposed method achieves, through combination of frequency split and constrained optimization, both real-time and accuracy calculation for real-time and accurate tracking.

An object, such as platform, may be mounted on the at least one actuator. The actuator controller may be configured to achieve tracking of the target motion by the object. The physical constraints may be physical constraints of the object or of the at least one actuator.

Optionally, the at least one control value comprises at least one of a specific force, a translational motion, a tilt (pitch), a yaw and a roll, or values representative thereof.

The specific force represents gravito-inertial forces acting on a body. The specific force may be denoted as the sum of inertial forces and gravity acting on the body, per unit mass (i.e. the specific force may have the same unit as an acceleration).

The translational motion represents the motion of translation along a direction, preferably along a straight axis.

The roll, the yaw and the pitch represent rotation motion about respective axes. Given a longitudinal direction (e.g. the direction of translation), the tilt or pitch represents leaning forward or backward in the longitudinal direction, the roll represents leaning sideward with respect to the longitudinal direction (i.e. rotating about the longitudinal direction), and the yaw represents pivoting so as to shift the longitudinal direction to the left or to the right.

The specific force, the translation motion, the tilt, the yaw and the roll may refer to the object mounted on the at least one actuator.

Controlling an actuator based on at least one of the above control value is known per se in the art. Therefore, the proposed method enables retrofitting to existing actuator controllers.

Optionally, the optimization model prioritizes tracking with the specific force over tracking with the translational motion or the tilt. That is, in case the optimization model takes into account not only the specific force but also the translational motion and/or the tilt as the control values, the optimization model penalizes deviation from the target specific force (i.e. the specific force of the target motion) more than deviation from the target translational motion and/or tilt (i.e. the translational motion and/or tilt of the target motion, respectively), e.g. through a greater weight on specific force deviation in a cost function. This enables to achieve better workspace utilization, as multiple configurations of translational motion and tilt can produce the same specific force: therefore, for a given specific force to be re-created in view of the inputs, the calculated translational motion could compensate for the calculated tilt, and vice versa.

Optionally, the one or more physical constraints include at least one workspace constraint. Workspace stands for the space in which the at least one actuator can work, either for intrinsic reasons (e.g. reasons relating to the actuator itself) or extrinsic reasons (e.g. reasons relating to other limitations, e.g. the size of the object mounted on the actuator). Examples of workspace constraints include a space available for motion of the object and/or a stroke or speed limit of the at least one actuator. Taking workspace constraints into account avoids unwanted edge effects.

Optionally, the one or more physical constraints include a braking constraint configured to restrict motion close to workspace limits. For instance, the braking constraint may restrict object motion as the object gets closer to limits of the object's workspace. This also contributes to avoiding unwanted edge effects.

Optionally, the optimization model includes a model predictive control solver, optionally a non-linear model predictive control solver. As mentioned above, MPC is known per se in the art, however not in the context of the present disclosure.

Optionally, the optimization model is biased towards a neutral position. This bias is sometimes referred to as washout. The neutral position may be a neutral position of the object. Thus, the optimization model may be configured to make the object tend to return to a neutral position thereof. Deviation may be deviation of the object. More generally, the neutral position may be a position where the object is away from the workspace limits, where the actuators have maximum sensibility, etc. Thanks to these provisions, the optimization model avoids, as much as appropriate, being limited by the physical constraints. These provisions further prompt the actuator controller to operate where the actuators have their maximum potential.

Optionally, a cost function of the optimization model is configured to penalize deviation from the neutral position. Thus, washout can be efficiently implemented.

Optionally, the deviation is penalized through one or more weights, the one or more weights being adaptive as a function of a motion replicated by the actuator controller. That is, the weights are not constant values but values depending on the motion, e.g. the motion of the object. This allows a single adaptive setting for a variety of motion scenarios, rather than tuning the weights for each scenario.

Optionally, the one or more weights increase as the deviation increases.

Optionally, the method comprises obtaining a derivative of at least one acceleration defining the target motion. A derivative of an acceleration is sometimes referred to as a jerk in the technical field. In the present context, the at least one acceleration may include at least one of a translational acceleration, a tilt acceleration, a yaw acceleration and a roll acceleration. Taking jerks into account, e.g. as values defining the target motion (i.e. the values to track and re-create by the actuators) enables to achieve a smoother motion, e.g. a smoother motion of the object.

Optionally, the target motion is obtained by applying a scaling factor to a reference motion. The reference motion may be a motion of a reference object, the motion experience of which the actuators aim to replicate. The scaling factor enables to make the object mounted on the actuators move within a space more limited than the reference object, while still producing similar motion experience.

Optionally, the scaling factor is determined such that a rate of change of the target motion is less than a capability to reproduce said rate of change, in particular a capability of the object to reproduce said change of rate. Such capability may depend on the characteristics of the actuators, the object itself, the workspace, etc. The capability represents an upper limit of the motion that can be reproduced.

The present disclosure is further directed to a calculator device configured to calculate at least one control value to be inputted to an actuator controller for tracking a target motion, the calculator device comprising an extracting module configured to extract a high-frequency component and a low-frequency component from the target motion, and an optimization module configured to input the high-frequency component and the low-frequency component into an optimization model configured to take into account one or more physical constraints to output the at least one control value.

The calculator device may carry out any or all of the features of the above-described calculation method. The calculator device, or any of its modules, may have the hardware structure of a computer.

The present disclosure is further directed to a simulator comprising at least one actuator, an object mounted on the at least one actuator, an actuator controller and the above-described calculator device, wherein the actuator controller is configured to control the at least one actuator for the object to track the target motion.

The simulator may be a driving simulator. The object may be a platform, e.g. a platform on which a driver can sit. The platform may comprise vehicle features such as a seat, a steering wheel, pedals, or more generally vehicle controls, etc.

The object (platform) of the simulator may have e.g. two, four or six degrees of freedom.

The present disclosure is further directed to a computer program set including instructions for executing the steps of the calculation method when said program set is executed by at least one computer. This program can use any programming language and take the form of source code, object code or a code intermediate between source code and object code, such as a partially compiled form, or any other desirable form.

The present disclosure is further directed to a recording medium readable by at least one computer and having recorded thereon at least one computer program including instructions for executing the steps of the calculation method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk. Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- Fig. 1 diagrammatically shows a simulator in side view and a calculator device according to an embodiment;
- Fig. 2 is a block diagram showing an overview of a calculation method according to an embodiment.

DETAILED DESCRIPTION OF EMBODIMENTS

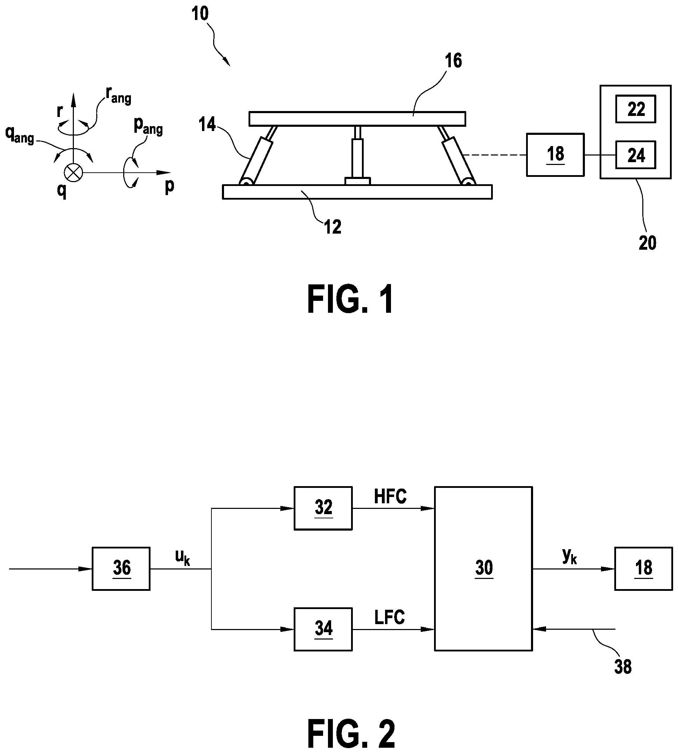

Figure 1 shows a simulator 10. The simulator 10 may be fixed to a support 12, e.g. considered to be fixed with respect to an outside observer. An orthogonal reference frame (p, q, r) fixed with respect to the support 12 may be provided, where p is a longitudinal direction, q is a lateral direction and r is a height direction.

The simulator 10 comprises at least one actuator 14. Although three actuators 14 are illustrated, any number of actuator is encompassed. For instance, the simulator 10 may be hexapod-based. Besides, while illustrated as cylinders, the actuators 14 may be any type of actuators.

The simulator 10 comprises an object 16 mounted on the actuators 14. The object 16 may have from one to six degrees of freedom, based on the number and configuration of the actuators. In an example, the object 16 may have four or six degrees of freedom. Upon operation of the actuators 14, the object 16 may be translated in any of the longitudinal direction p, the lateral direction q or the height direction r, and/or rotated about any of the longitudinal direction p (roll $p_{ang}$), the lateral direction q (pitch or tilt $q_{ang}$) or the height direction r (yaw $r_{ang}$), as available. In the following, without loss of generality, a six-degree of freedom simulator will be considered (three translations and three rotations). The simulator may be controlled according to a four-degree of freedom motion cueing algorithm, including longitudinal and lateral translations along with roll and pitch (tilt) motion.

In an embodiment, the object 16 may be a platform. The simulator 10 may have any purpose. In an embodiment, the simulator 10 may be a driving simulator. In such case, the platform may receive driving equipment as detailed above.

The simulator 10 further comprises an actuator controller 18 configured to control the actuators 14, and a calculator device 20. The actuator controller 18 and/or the calculator device 20 may comprise an electronic circuit, a processor (shared, dedicated, or group), a combinational logic circuit, a memory that executes one or more software programs, and/or other suitable components that provide the described functionality. In other words, the actuator controller 18 and/or the calculator device 20 may be a computer device. The actuator controller 18 may be connected to a memory, which may store data, e.g. a computer program which when executed, operates the actuators 14 based on inputs received from the calculator device 20, e.g. for the object 16 to track a target motion. The calculator device 20 may be connected to a memory, which may store data, e.g. a computer program which when executed, carries out the calculation method according to the present disclosure.

The calculator device 20 is a device configured to calculate at least one control value to be inputted to the actuator controller 18 for tracking a target motion. The calculator device comprises an extracting module 22 and an optimization module 24.

The extracting module 22 has an input for receiving information representative of a target motion, and is configured to extract a high-frequency component and a low-frequency component from the target motion. In particular, the calculator device 20, in particular the extracting module 22, may be connected to a motion sensor or a memory.

If the method is to be carried out in real time, the target motion may be acquired in real time. Alternatively or in addition, the target motion may be acquired beforehand, and obtained by the extracting module 22 later, e.g. in case of post-processing of the recorded target motion.

The extracting module 22 may be implemented as software running on the calculator device 20 or as a hardware element of the calculator device 20. The extracting module 22 carries out an extraction process, e.g. a filtering process, for extracting a high-frequency component and a low-frequency component from the target motion. The extracting module 22 outputs the HF component and the LF component to the optimization module 24.

Furthermore, also the optimization module 24 may be implemented as software running on the calculator device 20 or as a hardware element of the calculator device 20. In particular, the detection system 10 may comprise software and/or hardware which include both the extracting module 22 and the optimization module 24. Alternatively the extracting module 22 may be realized as independent software and/or hardware. As mentioned above, the optimization module 24 inputs the HF component and the LF component into an optimization model configured to take into account one or more physical constraints, and outputs at least one control value, e.g. to the actuator controller 18. The functions of the calculator device 20 will be described in more details with reference to the calculation method, an overview of which is depicted in Fig. 2.

As mentioned above, the calculation method is a computer-implemented method for calculating at least one control value $y_k$ to be inputted to the actuator controller 18 for tracking a target motion $u_k$, the method comprising extracting a high-frequency component HFC and a low-frequency component LFC from the target motion $u_k$, and inputting the high-frequency component HFC and the low-frequency component LFC into an optimization model 30 configured to take into account one or more physical constraints to output the at least one control value $y_k$.

For instance, the HF component HFC may be obtained by a high-pass filter 32. For instance, the LF component LFC may be obtained by a low-pass filter 34. The respective cut-off frequencies of the high-pass filter 32 and of the low-pass filter 32 may be equal to each other, for instance between 0.1 and 2.5 Hz, e.g. about 0.5 Hz. Note that the cut-off frequency(ies) may be tuned based on the characteristics of the actuators 14, object 16 and/or workspace. For instance, if the simulator 10 has a larger range (e.g. if the workspace is larger), it may be interesting to use more linear acceleration and less tilt coordination as will be detailed below, that is, to increase the cut-off frequency.

For conciseness, the following description focuses on the example in which the optimization model 30 includes an MPC solver, e.g. a non-linear MPC solver, but other types of optimization models 30 may be used, such as a linear quadratic regulator (LQR) or a data driven model (e.g. a machine learning model), although an LQR could not take physical constraints into account.

In an example, the cost function of an MPC minimises the squared error between the reference values (with hats) and actual values (without hats) of the outputs ($y_k$), inputs ($u_k$), and states ($x_k$) over a prediction horizon of $N$ future samples:

$$
\begin{aligned}
u_k = \arg \min_{u_k} \frac{1}{N} \sum_{k=1}^{N} [\,& (x_k - \hat{x}_k)^T W_x (x_k - \hat{x}_k) \\
& + (y(x_k, u_k) - \hat{y}_k)^T W_y (y(x_k, u_k) - \hat{y}_k) \\
& + (u_k - \hat{u}_k)^T W_u (u_k - \hat{u}_k)\,]
\end{aligned}
\tag{1}
$$

That is, in this example, the cost function comprises an output term, a state term and an input term; however, at least the state term is optional.

Specifically, as the output term, the cost function penalizes the difference between the outputs, i.e. between the calculated control value $y_k = y(x_k, u_k)$ and the control value that would result from the target motion $\hat{y}_k$.

The state term based on the difference ($x_k$ - $\hat{x}_k$) provides 'washout' to the object 16 by consistently trying to return it to its reference position $\hat{x}_k$. That is, more generally speaking, the state term biases the optimization model towards a neutral position which here corresponds to the reference position. With the state term, the cost function penalizes deviation from the neutral position.

The input term ($u_k$ - $u_k$) restricts high input values of the target motion.

In Equation (1), the tunable parameters are represented by weighting matrices $W_y$, $W_u$ and $W_x$.

A triple integrator system may be used to define the orientation and location of the object 16:

$$
\begin{aligned}
\dot{s}_{hex} &= v_{hex} \\
\dot{v}_{hex} &= a_{hex} \\
\dot{a}_{hex} &= j_{hex} \\
\dot{\theta}_{hex} &= \omega_{hex} \\
\dot{\omega}_{hex} &= \alpha_{hex} \\
\dot{\alpha}_{hex} &= j_{ang,hex}
\end{aligned}
\tag{2}
$$

where $s_{hex}$, $v_{hex}$ and $a_{hex}$ represent the object's translational position, velocity and acceleration respectively and $\theta_{hex}$, $\omega_{hex}$ and $\alpha_{hex}$ represent the object's angular orientation, velocity and acceleration. Due to low values of vehicle rotations (pitch and roll motion) in the example of a driving simulator, they are neglected here and can be directly added to the rotational inputs for the actuator controller 18.

In an embodiment, the calculation method comprises obtaining a derivative of at least one acceleration, also known as a jerk, to define the target motion. Here, $j_{hex}$ and $j_{ang,hex}$ represent the translational and angular jerk respectively, which are the inputs to the system. That is, the target motion is defined by $u_k = (j_{hex} j_{ang,hex})$. As discussed above, the cost function may penalize the jerks (inputs), limiting rapid changes in acceleration.

The state $x_k$ may comprise the object's translational position $s_{hex}$, velocity $v_{hex}$ and acceleration $a_{hex}$ and the object's angular orientation $\theta_{hex}$, velocity $\omega_{hex}$ and acceleration $\alpha_{hex}$.

The output, namely the control value, may comprise at least one of a specific force, a translational motion, a tilt, a yaw and a roll, or values representative thereof. Specifically, the specific force may comprise two components, arising through the translational motion and tilt-coordination. The translational component may correspond to the linear acceleration of the object, while the tilt component may come from the gravitational force subjected on a body located on the object (e.g. an occupant of the simulator 10 seated on the platform) due to tilt of the object. The tilt component may be described by:

$$
\dot{G}_{hex} = -\omega_{hex} \times G
\tag{3}
$$

where G is the gravitational constant.

The total specific force may be defined as:

$$f_{spec} = a_{hex} + G_{hex} \tag{4}$$

In an example, the output vector comprises the total specific force, tilt component of the specific force and translational acceleration of the object 16 ($y_k = [f_{spec}, G_{hex}, a_{hex}]$). The pre-generated high-frequency and low-frequency components provide guidance for the tilt-coordination and translation motion of the simulator 10. This gives the calculation method combined benefits of washout and optimization (e.g. MPC)-based algorithms.

In the optimization model 30, the extracted high-frequency component HFC may serve as a reference for the translational motion ($a_{hex}$) of the object 16, as the sustained low-frequency component would lead to workspace limit violations.

Conversely, the low-frequency component LFC may be used as a reference for tilt coordination ($G_{hex}$).

The total specific force is also provided as a reference in order to allow compensation between translational motion and tilt coordination, should one of them fail to track the target motion. Optionally, the optimization model prioritizes tracking with the specific force over tracking with the translational motion or the tilt, for instance by assigning a greater weight to deviation of the specific force than deviation of the translation motion or tilt. In an example, the weight on total specific force tracking is at least twice as much as the greater of the weight on linear acceleration tracking and the weight on tilt-coordination tracking, preferable at least three times as much. In an example, the weights on linear acceleration tracking and on tilt-coordination tracking are both equal to 1, whereas the weight on total specific force tracking is equal to 5. These weights together correspond to the above-mentioned $W_y$.

Besides, a weight on the linear jerk may be $10^{-2}$ and a weight on angular jerk may be $10^{-3}$. These weights correspond to the above-mentioned $W_u$. Weights on jerk and angular jerk are provided to avoid oscillations in the specific force, due to rapidly changing acceleration. These weights may be tuned to be large enough to avoid or at least limit oscillations, while being small enough in order to limit their negative impact (e.g. delay) on the tracking of the specific force. For instance, the weights on jerk and angular jerk may be less than the weights on the outputs.

As mentioned previously, the target motion may be obtained by applying a scaling factor to a reference motion. For instance, in the example of a driving simulator, the reference motion is the vehicle motion, while the target motion is scaled down with respect to the reference motion. The reference motion may undergo a scaling process 36 to output the target motion.

Optionally the scaling factor is determined such that a rate of change of the target motion is less than a capability to reproduce said rate of change. Herein, it is assumed that the actuation scenario is known prior to the operation. Due to the capability of recreating sustained accelerations, tilt-coordination is responsible for the major recreation of the specific force, especially in a relatively limited workspace. Thus the potential of the simulator in recreating the rate of change of the specific force through tilt-coordination is equated to the rate of change of reference specific force:

$$max|\dot{f}_{spec,ref}| \leq min|\dot{f}_{spec,tilt}|$$

which can be rewritten as:

$$max\frac{dAsin(\omega t)}{dt} \leq min|\frac{d(gsin(\theta_{tilt}))}{dt}|$$

with A being a constant and g being the g-force,
and finally rewritten as:

$$max\frac{dAsin(\omega t)}{dt} \leq min|\omega_{tilt}gcos(\theta_{tilt})| \tag{5}$$

Since the left term is maximum for $\omega = \frac{2\pi}{T} rad/s$ and the right term is minimum when for $\theta_{tilt}$ reaches a maximum (e.g. the maximum tilt $\theta_{max}$ of the object 16, for instance 30°), Eq. (5) finally provides the scaling factor $k$:

$$k \leq \frac{\omega_{tilt}\ g}{2*\pi Av}cos(\theta_{max}) \text{ or } k \leq \frac{\omega_{tilt}\ g}{max\dot{f}_{spec,ref}}cos(\theta_{max})$$

where $\omega_{tilt}$ corresponds to the tilt-rate perception threshold under which an occupant does not perceive tilt, so that the occupant does not perceive any false cues due to the tilting of the object. For instance, $\omega_{tilt} \leq$ 3 deg/s.

In an example, the scaling factor may lies between 0.05 and 0.6, desirably between 0.1 and 0.2.

As mentioned above, the object 16, or more generally the actuators 14, need to be controlled within a certain workspace. Proper utilization of the workspace enables to get better motion tracking.

In an example, the one or more physical constraints of the optimization model 30 include at least one workspace constraint. That is, the optimization model 30 is aware of the workspace-related limits that it should not exceed. For instance, at least one of the tilt $\theta_{hex}$, the tilt rate $\omega_{hex}$, the position $s_{hex}$, the speed $v_{hex}$ and the acceleration $a_{hex}$ of the object 16 may be bounded as a function of the actuators' characteristics or of the space available for the actuators 14 and the object 16 to move. In addition, other considerations may be taken into account as constraints: for instance, as mentioned above, the tilt rate may be restricted below the human perception threshold for angular velocities, so that object rotation below this threshold can be used to create the perception of translational acceleration. For instance, a tilt rate of 3 *deg/s* cannot be detected by the human brain and this is registered as translational motion, the criteria exploited in motion cueing for recreating motion perception.

More generally, Table 1 below provides an example of applicable workspace constraints in an embodiment.

Table 1

| Quantity | limit |
|---|---|
| $\omega_{hex}$ | $\pm 3 deg/s$ |
| $\theta_{hex}$ | $\pm 30 deg$ |
| $v_{hex}$ | $\pm 7.2 m/s$ |
| $a_{hex}$ | $\pm 9.81 m/s^2$ |
| $\|s_{hex}\|$ | $0.5 m$ |

Additionally, the one or more physical constraints may include a braking constraint configured to restrict motion close to workspace limits. In an embodiment, as the workspace limits approach, the braking constraint limits the object velocity and tilt rate, ensuring better workspace utilization. To this end, the above mentioned constraint on position and tilt may apply not directly to the actual position and tilt, but rather to a (e.g. linear) combination of position or tilt with respective derivatives thereof.

For instance, the relation for the constraint on displacement and angular orientation may be:

$$s_{brk} = s_{hex} + c_v v_{hex} T_{brk,s} + 0.5 c_u a_{hex} T_{brk,s}^2 \qquad (7)$$

$$\theta_{brk} = \theta_{hex} + c_\omega \omega_{hex} t_{brk,\theta} + 0.5 c_u \alpha_{hex} T_{brk,\theta}^2 \qquad (8)$$

where $c_v = 1$, $c_\omega = 1$, $c_u = 0.45$, $T_{brk,\theta} = 0.5$ s, $T_{brk,s} = 2.5$ s, or more generally are constants, the value of which depends on the characteristics of the workspace, object 16 and/or actuators 14.

The physical constraints of the optimization model 30 ensure that the object does not reach its limits, without any contribution to the cost function. The physical constraints may be rewritten as:

$$\|s_{brk}\| \leq s_{max} \qquad (9)$$

$$|\theta_{brk}| \leq \theta_{max} \qquad (10)$$

where $s_{max}$, the maximum displacement (taking account both longitudinal and lateral displacements), may be 0.5 m as per Table 1, and $\theta_{max}$, the maximum tilt, may be 30 deg as per Table 1.

In a variant, in order to prevent possible violations of the constraints, which create instability in the calculation method, at least one of the above constraints may be reformulated as a so-called soft constraint, namely a constraint such that the violation thereof is allowed but penalized. For instance, for the tilt rate, the constraint may be reformulated as:

$$-\omega_{th} \leq \omega_{hex} + \delta$$

$$\omega_{hex} - \delta \leq \omega_{th}$$

$$\delta \geq 0$$

where $\omega_{th}$ is the threshold for tilt rate and the slack variable, $\delta$, is positive and penalised in the cost function to reduce high violation of constraints. For instance, $\delta = 10^5$ deg/s is used, but other values such as $10^4$ or $10^6$deg/s, or any value in-between, would also work.

As mentioned above, the optimization model 30 is biased towards a neutral position. Indeed, the simulator 10 has the maximum potential of recreating any motion from its neutral position, away from the workspace limits. Thus, to ensure that the simulator 10 performs at its maximum potential, the object 16 is ideally operating around its neutral position. As mentioned above, this may be performed by adding penalisation to the state term in minimise which brings the object back to its neutral position ($\hat{x}_k$).

As per Equation (1), the deviation from the neutral position is penalized through one or more weights, e.g. matrix $W_x$ in Equation (1). It is possible to use adaptive weights, rather than constant weights, which adapt to the motion replicated by the actuator controller 18. That is, the weights may change with the value of the state $x_k$. This allows a single adaptive setting for all the tracking scenarios, rather than tuning the washout weights for each scenario.

In order to efficiently bias the object back to its neutral position, the weights may increase as the deviation increases. Thus, the bigger the deviation, the bigger the weights, and the bigger the penalization. Thus, the penalization is all the more efficient.

Examples of adaptive weights $w_s$ and $w_\theta$, which are components of $W_x$ penalizing $s_{hex}$ and $\theta_{hex}$ respectively (see Equation (1)), are given below for the position and orientation of the object 16, respectively:

$$w_s = \frac{k_1}{k_2 * (|s_{hex}| - s_{max})^2 + \Delta} \tag{11}$$

$$w_\theta = \frac{k_3}{k_4 * (|\theta_{hex}| - \theta_{max})^2 + \Delta} \tag{12}$$

where $k_1$, $k_2$, $k_3$ and $k_4$ are parameters through which the shape of the weight function can be changed. $\Delta$ (here 0.01) is a small value added to the denominator to avoid singularity. The values selected for the simulations are $k_1 = 1$, $k_2 = 50\,m^{-2}$, $k_3 = 0.1$ and $k_4 = 50\,rad^{-2}$. Note that other components of $W_x$ may be zero.

Finally, feedback 38 may be received by the optimization model 30, as known per se in the art. Feedback 38 may be output by the actuator controller 18, the actuators 14 or the object 16, or any instrumentation thereof.

Simulation experiments have been carried out by the inventors on a driving simulator with the above-detailed settings, and based on a plurality of input scenarios such as a step signal (sudden increment in the reference specific force), a multisine wave (combination of sine waves with different amplitudes and frequencies) and a slalom maneuver driving scenario, the latter being one of the most aggressive type of motion that a vehicle can be subjected to.

As compared to a benchmark having no frequency split and the specific force as the sole output, results show that up to a prediction horizon of 100 steps, the proposed calculation method outperforms the benchmark algorithm in terms of accuracy. The proposed calculation method also produces faster results. Therefore, at low prediction horizons, the proposed calculation method is a better choice for motion cueing. At higher prediction horizons, the benchmark algorithm is slightly more accurate than the proposed calculation method, but the proposed calculation method still provides a faster convergence to the solution. For the purpose of real-time implementation, a prediction horizon of about 40 septs is considered, for which the proposed calculation method offers both accuracy and execution speed compatible with real-time implementation.

As discussed above, frequency-splitting provides pre-defined references for the actuator control based on the high-frequency and low-frequency components. This allows the optimization model to converge to a unique solution faster. In contrast, state-of-the-art optimization models provide limited guidance for the object motion.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A computer-implemented method for calculating at least one control value ($y_k$) to be inputted to an actuator controller (18) for tracking a target motion ($u_k$), the method comprising extracting a high-frequency component (HFC) and a low-frequency component (LFC) from the target motion ($u_k$), and inputting the high-frequency component (HFC) and the low-frequency component (LFC) into an optimization model (30) configured to take into account one or more physical constraints to output the at least one control value ($y_k$).

2.  The method of claim 1, wherein the at least one control value ($y_k$) comprises at least one of a specific force, a translational motion, a pitch, a yaw and a roll, or values representative thereof.

3.  The method of claim 2, wherein the optimization model (30) prioritizes tracking with the specific force over tracking with the translational motion or the tilt.

4.  The method of any one of claims 1 to 3, wherein the one or more physical constraints include at least one workspace constraint.

5.  The method of any one of claims 1 to 4, wherein the one or more physical constraints include a braking constraint configured to restrict motion close to workspace limits.

6.  The method of any one of claims 1 to 5, wherein the optimization model (30) includes a model predictive control solver, optionally a non-linear model predictive control solver.

7.  The method of any one of claims 1 to 6, wherein the optimization model (30) is biased towards a neutral position, optionally wherein a cost function of the optimization model (30) is configured to penalize deviation from the neutral position.

8.  The method of claim 7, wherein the deviation is penalized through one or more weights, the one or more weights being adaptive as a function of a motion replicated by the actuator controller.

9.  The method of claim 8, wherein the one or more weights increase as the deviation increases.

10. The method of any one of claims 1 to 9, comprising obtaining a derivative of at least one acceleration defining the target motion ($u_k$).

11. The method of any one of claims 1 to 10, wherein the target motion ($u_k$) is obtained by applying a scaling factor to a reference motion, optionally wherein the scaling factor is determined such that a rate of change of the target motion ($u_k$) is less than a capability to reproduce said rate of change.

12. A calculator device (20) configured to calculate at least one control value ($y_k$) to be inputted to an actuator controller for tracking a target motion ($u_k$), the calculator device comprising an extracting module (22) configured to extract a high-frequency component and a low-frequency component from the target motion ($u_k$), and an optimization module (24) configured to input the high-frequency component and the low-frequency component into an optimization model (30) configured to take into account one or more physical constraints to output the at least one control value ($y_k$).

13. A simulator (10), optionally a driving simulator, comprising at least one actuator (14), an object (16), such as a platform, mounted on the at least one actuator (14), an actuator controller (18) and the calculator device (20) of claim 12, wherein the actuator controller (18) is configured to control the at least one actuator (14) for the object (16) to track the target motion ($u_k$).

14. A computer program set including instructions for executing the steps of the method of any one of claims 1 to 11 when said program set is executed by at least one computer.

15. A recording medium readable by at least one computer and having recorded thereon at least one computer program including instructions for executing the steps of the method of any one of claims 1 to 11.

**Amended claims in accordance with Rule 137(2) EPC.**

1. A computer-implemented method for calculating at least one control value ($y_k$) to be inputted to an actuator controller (18) for tracking a target motion ($u_k$), the method comprising extracting a high-frequency component (HFC) and a low-frequency component (LFC) from the target motion ($u_k$), and being **characterized by** inputting the high-frequency component (HFC) and the low-frequency component (LFC) into a model predictive control-based optimization model (30) taking into account one or more physical constraints of at least one actuator (14) to output the at least one control value ($y_k$).

2. The method of claim 1, wherein the at least one control value ($y_k$) comprises at least one of a specific force, a translational motion, a pitch, a yaw and a roll, or values representative thereof.

3. The method of claim 1, wherein the at least one control value ($y_k$) comprises a specific force and at least one of a translational motion and a tilt, and wherein the optimization model (30) prioritizes tracking with the specific force over tracking with the translational motion or the tilt.

4. The method of any one of claims 1 to 3, wherein the one or more physical constraints include at least one workspace constraint.

5. The method of any one of claims 1 to 4, wherein the one or more physical constraints include a braking constraint configured to restrict motion close to workspace limits.

6. The method of any one of claims 1 to 5, wherein the optimization model (30) includes a non-linear model predictive control solver.

7. The method of any one of claims 1 to 6, wherein the optimization model (30) is biased towards a neutral position, optionally wherein a cost function of the optimization model (30) is configured to penalize deviation from the neutral position.

8. The method of claim 7, wherein the deviation is penalized through one or more weights, the one or more weights being adaptive as a function of a motion replicated by the actuator controller.

9. The method of claim 8, wherein the one or more weights increase as the deviation increases.

10. The method of any one of claims 1 to 9, comprising obtaining a derivative of at least one acceleration defining the target motion ($u_k$).

11. The method of any one of claims 1 to 10, wherein the target motion ($u_k$) is obtained by applying a scaling factor to a reference motion, optionally wherein the scaling factor is determined such that a rate of change of the target motion ($u_k$) is less than a capability to reproduce said rate of change.

12. A calculator device (20) configured to calculate at least one control value ($y_k$) to be inputted to an actuator controller for tracking a target motion ($u_k$), the calculator device comprising an extracting module (22) configured to extract a high-frequency component and a low-frequency component from the target motion ($u_k$), and being **characterized by** further comprising an optimization module (24) configured to input the high-frequency component and the low-frequency component into a model predictive control-based optimization model (30) configured to take into account one or more physical constraints of at least one actuator (14) to output the at least one control value ($y_k$).

13. A simulator (10), optionally a driving simulator, comprising at least one actuator (14), an object (16), such as a platform, mounted on the at least one actuator (14), an actuator controller (18) and the calculator device (20) of claim 12, wherein the actuator controller (18) is configured to control the at least one actuator (14) for the object (16) to track the target motion ($u_k$).

14. A computer program set including instructions for executing the steps of the method of any one of claims 1 to 11 when said program set is executed by at least one computer.

15. A recording medium readable by at least one computer and having recorded thereon at least one computer program including instructions for executing the steps of the method of any one of claims 1 to 11.

1. A computer-implemented method for calculating at least one control value ($y_k$) to be inputted to an actuator controller (18) for tracking a target motion ($u_k$), the method comprising extracting a high-frequency component (HFC) and a low-frequency component (LFC) from the target motion ($u_k$), and being **characterized by** inputting the high-frequency component (HFC) and the low-frequency component (LFC) into a model predictive control-based optimization model (30) taking into account one or more physical constraints to output the at least one control value ($y_k$), wherein the one or more physical constraints include at least one workspace constraint, the at least one workspace constraint including a space available for motion of an object and/or a stroke or speed limit of at least one actuator (14).

2. The method of claim 1, wherein the at least one control value ($y_k$) comprises at least one of a specific force, a translational motion, a pitch, a yaw and a roll, or values representative thereof.

3. The method of claim 1, wherein the at least one control value ($y_k$) comprises a specific force and at least one of a translational motion and a tilt, and wherein the optimization model (30) prioritizes tracking with the specific force over tracking with the translational motion or the tilt.

4. The method of any one of claims 1 to 3, wherein the one or more physical constraints include a braking constraint configured to restrict motion close to workspace limits.

5. The method of any one of claims 1 to 4, wherein the optimization model (30) includes a non-linear model predictive control solver.

6. The method of any one of claims 1 to 5, wherein the optimization model (30) is biased towards a neutral position, optionally wherein a cost function of the optimization model (30) is configured to penalize deviation from the neutral position.

7. The method of claim 6, wherein the deviation is penalized through one or more weights, the one or more weights being adaptive as a function of a motion replicated by the actuator controller.

8. The method of claim 7, wherein the one or more weights increase as the deviation increases.

9. The method of any one of claims 1 to 8, comprising obtaining a derivative of at least one acceleration defining the target motion ($u_k$).

10. The method of any one of claims 1 to 9, wherein the target motion ($u_k$) is obtained by applying a scaling factor to a reference motion, optionally wherein the scaling factor is determined such that a rate of change of the target motion ($u_k$) is less than a capability to reproduce said rate of change.

11. A calculator device (20) configured to calculate at least one control value ($y_k$) to be inputted to an actuator controller for tracking a target motion ($u_k$), the calculator device comprising an extracting module (22) configured to extract a high-frequency component and a low-frequency component from the target motion ($u_k$), and being **characterized by** further comprising an optimization module (24) configured to input the high-frequency component and the low-frequency component into a model predictive control-based optimization model (30) configured to take into account one or more physical constraints to output the at least one control value ($y_k$), wherein the one or more physical constraints include at least one workspace constraint, the at least one workspace constraint including a space available for motion of an object and/or a stroke or speed limit of at least one actuator (14).

12. A simulator (10), optionally a driving simulator, comprising at least one actuator (14), an object (16), such as a platform, mounted on the at least one actuator (14), an actuator controller (18) and the calculator device (20) of claim 11, wherein the actuator controller (18) is configured to control the at least one actuator (14) for the object (16) to track the target motion ($u_k$).

13. A computer program set including instructions for executing the steps of the method of any one of claims 1 to 10 when said program set is executed by at least one computer.

14. A recording medium readable by at least one computer and having recorded thereon at least one computer program including instructions for executing the steps of the method of any one of claims 1 to 10.

**FIG. 1**

**FIG. 2**

# EUROPEAN SEARCH REPORT

Application Number

EP 23 18 4725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | Jain Vishrut ET AL: "Motion Cueing Algorithm for Effective Motion Perception: A frequency-splitting MPC Approach", arXiv.org, 4 September 2023 (2023-09-04), XP093107359, Ithaca DOI: 10.48550/arxiv.2309.01689 Retrieved from the Internet: URL:https://arxiv.org/abs/2309.01689 [retrieved on 2023-11-30] * the whole document * | 1-15 | INV. G05B13/04 G05B17/02 G09B9/02 G09B19/16 G06F30/00 |
| X | TANG WEI ET AL: "An Improved Washout Algorithm for UPRT Scenario", 3 July 2021 (2021-07-03), TOPICS IN CRYPTOLOGY – CT-RSA 2020 : THE CRYPTOGRAPHERS' TRACK AT THE RSA CONFERENCE 2020, SAN FRANCISCO, CA, USA, FEBRUARY 24-28, 2020, CORNELL UNIVERSITY LIBRARY, 201 OLIN LIBRARY CORNELL UNIVERSITY ITHACA, NY 14853, PAGE(S) 65 – 79, XP047601281, [retrieved on 2021-07-03] * the whole document * | 1-15 | |
| X | ASADI HOUSHYAR ET AL: "Increasing Motion Fidelity in Driving Simulators Using a Fuzzy-Based Washout Filter", IEEE TRANSACTIONS ON INTELLIGENT VEHICLES, IEEE, vol. 4, no. 2, 1 June 2019 (2019-06-01), pages 298-308, XP011727143, ISSN: 2379-8858, DOI: 10.1109/TIV.2019.2904388 [retrieved on 2019-05-23] * the whole document * | 1-5, 10-15 | |

TECHNICAL FIELDS SEARCHED (IPC)

G05B
G09D
G09B
G06F

-/--

The present search report has been drawn up for all claims

| Place of search | Date of completion of the search | Examiner |
|---|---|---|
| The Hague | 4 December 2023 | Itoafa, Alex |

Europäisches Patentamt

European Patent Office

Office européen des brevets

# EUROPEAN SEARCH REPORT

**Application Number**

EP 23 18 4725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | BRUSCHETTA MATTIA ET AL: "A Nonlinear, MPC-Based Motion Cueing Algorithm for a High-Performance, Nine-DOF Dynamic Simulator Platform", IEEE TRANSACTIONS ON CONTROL SYSTEMS TECHNOLOGY, IEEE SERVICE CENTER, NEW YORK, NY, US, vol. 25, no. 2, 1 March 2017 (2017-03-01), pages 686-694, XP011640589, ISSN: 1063-6536, DOI: 10.1109/TCST.2016.2560120 [retrieved on 2017-02-08] * the whole document *<br><br>----- | 1-15 | |
| A,D | KHUSRO YASH RAJ ET AL: "MPC-Based Motion-Cueing Algorithm for a 6-DOF Driving Simulator with Actuator Constraints", VEHICLES, vol. 2, no. 4, 2 December 2020 (2020-12-02), pages 625-647, XP093107325, ISSN: 2624-8921, DOI: 10.3390/vehicles2040036 * the whole document *<br><br>-----<br><br>-/-- | 1-15 | **TECHNICAL FIELDS SEARCHED (IPC)** |

The present search report has been drawn up for all claims

| Place of search | Date of completion of the search | Examiner |
|---|---|---|
| The Hague | 4 December 2023 | Itoafa, Alex |

EPO FORM 1503 03.82 (P04C01)

Europäisches
Patentamt

European
Patent Office

Office européen
des brevets

# EUROPEAN SEARCH REPORT

**Application Number**

**EP 23 18 4725**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | LAMPRECHT ALEXANDER ET AL: "Online Model Predictive Motion Cueing With Real-Time Driver Prediction", IEEE TRANSACTIONS ON INTELLIGENT TRANSPORTATION SYSTEMS, vol. 23, no. 8, 1 August 2022 (2022-08-01), pages 12414-12428, XP093107337, Piscataway, NJ, USA ISSN: 1524-9050, DOI: 10.1109/TITS.2021.3114003 Retrieved from the Internet: URL:https://ieeexplore.ieee.org/stampPDF/g etPDF.jsp?tp=&arnumber=9557748&ref=aHR0cHM 6Ly9zY2hvbGFyLmdvb2dsZS5jb20v> * the whole document * | 1-15 | |
| A,D | ZHOU FANG ET AL: "Motion cueing algorithms for a real-time automobile driving simulator", ACTES INRETS (ARCUEIL), 1 January 2012 (2012-01-01), pages 159-174, XP093107342, Bron ISSN: 0769-0266 ISBN: 978-2-85782-700-9 Retrieved from the Internet: URL:http://dsc2015.tuebingen.mpg.de/Docs/D SC_Proceedings/2012/DSC12_28_Fang_1.pdf> * the whole document * | 1-15 | TECHNICAL FIELDS SEARCHED (IPC) |

The present search report has been drawn up for all claims

| Place of search | Date of completion of the search | Examiner |
|---|---|---|
| The Hague | 4 December 2023 | Itoafa, Alex |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BRUSCHETTA, M.** ; **MARAN, F.** ; **BEGHI, A.** A nonlinear, MPC-based motion cueing algorithm for a high-performance, nine-DoF dynamic simulator platform. *IEEE Transactions on Control Systems Technology*, 2016, vol. 25 (2), 686-694
- **KHUSRO, Y. R.** ; **ZHENG, Y.** ; **GROTTOLI, M.** ; **SHYROKAU, B.** MPC-based motion-cueing algorithm for a 6-DOF driving simulator with actuator constraints. *Vehicles*, 2020, vol. 2 (4), 625-647

- **LAMPRECHT, A.** ; **STEFFEN, D.** ; **NAGEL, K.** ; **HAECKER, J.** ; **GRAICHEN, K.** Online model predictive motion cueing with real-time driver prediction. *IEEE Transactions on Intelligent Transportation Systems*, 2021, vol. 23 (8), 12414-12428
- **FANG, Z.** ; **KEMENY, A.** Motion cueing algorithms for a real-time automobile driving simulator. *Driving Simulation Conference*, 2012, 159-174